# EUROPEAN PATENT SPECIFICATION

(11) **EP 3 905 671 B1**
(45) Date of publication and mention of the grant of the patent: **12.07.2023**
(21) Application number: 21174203.6
(22) Date of filing: 13.04.2016
(51) Int. Cl.: H04N 7/18

(54) **METHOD AND DEVICE FOR PROCESSING REQUEST**
VERFAHREN UND VORRICHTUNG ZUR VERARBEITUNG EINER ANFRAGE
PROCÉDÉ ET DISPOSITIF DE TRAITEMENT DE REQUÊTE

(30) Priority: 26.06.2015 CN 201510369410
(43) Date of publication of application: 03.11.2021
(62) Divisional of application: 16165149.2
(73) Proprietor: Xiaomi Inc., Beijing 100085 (CN)
(72) Inventor: LI, Feiyun, Haidian District, Beijing 100085 (CN); CHEN, Changbing, Haidian District, Beijing 100085 (CN); HOU, Enxing, Haidian District, Beijing 100085 (CN)
(74) Representative: Nevett, Duncan

(56) References cited:
- WO-A1-01/99375
- WO-A2-2009/053990
- US-A1- 2006 184 690
- US-A1- 2014 375 818

## Description

### TECHNICAL FIELD

The present disclosure relates to the field of smart homes, and more particularly, to a method and a device for processing a request.

### BACKGROUND

An intelligent camera is an important component in smart homes. Camera data collected by the intelligent camera may be pushed to a smartphone and other monitoring terminals of a user, so that the user may view it.

In the related art, an account of an intelligent camera owner may share a usage permission of the camera to specified accounts via a mobile phone client. After obtaining this permission, a sharer may initiate a request for viewing a real-time video of the camera via a server. After a verification, the camera will send compressed real-time video stream data to the mobile phone client logging in the account, and then software in the mobile phone client may display the video content after decompression. WO2009053990A2 provides sensing apparatus (30), which includes a network camera (22), which is configured to capture images of a scene and to output a sequence of data packets containing digitized video data responsively to the images. A one-way link (24) is coupled to the network camera so as to transmit the data packets from the network camera to a packet communication network (40). WO0199375A1 provides A method and system for allowing customers to obtain images from a remote location. The system comprises an Internet site (10) and remote cameras (31) connected to the Internet through an interface (32). With the Internet site (10), a memory (11) is associated, in which information regarding the customers and their access permission is stored. When a user wants to see a certain remote location, he contacts the site (10) and enters his particulars. His particulars are compared with the information in the memory (11) to check whether this user is authorized to see this specific location. If so, images from the specific remote camera (31) associated with this remote location is relayed through the Internet to the user, by the Internet site (10). US2006184690A1 provides method for source-spoofed internet protocol packet traceback. This is an IP packet traceback technique for locating the origin of a malicious packet, even if the packet's IP source address is incorrect (spoofed). This is done by having routers lookup the source address in their routing tables, and mark the relevant entry.

### SUMMARY OF THE INVENTION

Embodiments of the present disclosure provide a method and a device for processing a request. The invention is defined in the independent claims.

According to a first aspect of embodiments of the present disclosure, a method for processing a request is provided, which includes: receiving, at a server, a query request sent by a first terminal, in which the query request is configured to request to query camera data collected by a camera, wherein the first terminal accesses a local area network in which the camera is, obtains a camera file list collected by the camera, displays the camera file list to a user, receives a selection from the user of one camera file from the camera file list, and sends the request for querying camera data corresponding to the selected camera file to the server, the request comprising an account corresponding to the first terminal; judging, by the server, whether the account corresponding to the first terminal has a permission of obtaining the camera data collected by the camera according to the query request; pushing, by the server, a first prompt message to a second terminal and pushing, by the server, a second prompt message to a third terminal, the second terminal bound to the camera and the third terminal corresponding to a manager of the server, if the account corresponding to the first terminal does not have the permission of obtaining the camera data collected by the camera, in which the first prompt message is configured to prompt that the camera data is accessed abnormally and the second prompt message is configured to prompt to track the first terminal.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a schematic diagram illustrating an implementing environment involved by a method for processing a request according to some exemplary embodiments;
Fig. 2 is a flow chart showing a method for processing a request according to an exemplary embodiment;
Fig. 3 is a flow chart showing a method for processing a request according to another exemplary embodiment;
Fig. 4 is a flow chart showing a method for adding an account according to an exemplary embodiment;
Fig. 5 is a block diagram showing a device for processing a request according to an exemplary embodiment;
Fig. 6 is a block diagram showing a device for processing a request according to another exemplary embodiment;
Fig. 7 is a block diagram showing a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

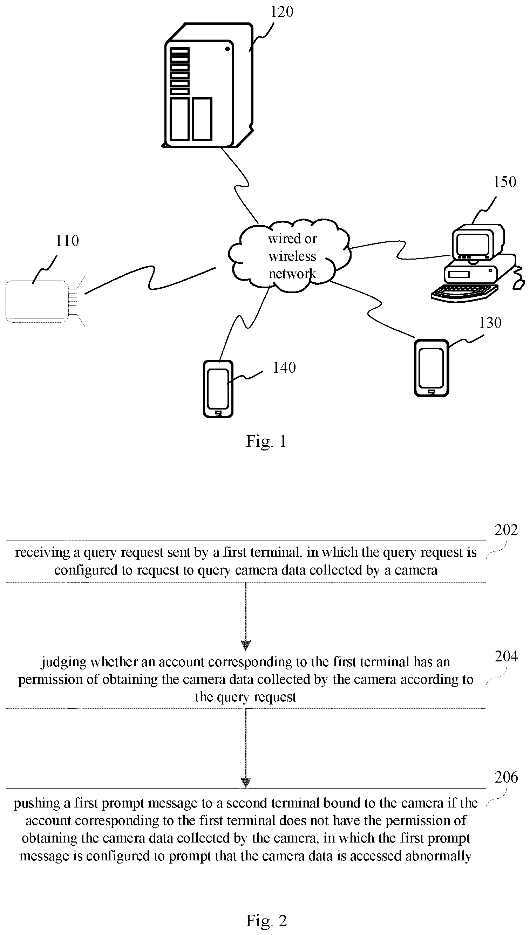

Fig. 1 is a schematic diagram illustrating an implementing environment involved by a method for processing a request according to some exemplary embodiments of the present disclosure. This implementing environment includes a camera 110, a server 120, a first terminal 130, a second terminal 140 and a third terminal 150.

Image data and/or video data collected by the camera 110 are stored in the server 110. The server 120 provides a video data pushing service to each user terminal.

The first terminal 130 and the second terminal 140 may be a smartphone, a tablet computer, an e-book reader, a personal computer and other user terminals respectively.

The third terminal 150 is a terminal for maintaining and managing the server 120 and the data in the server 120 by managers of the server 120.

The camera 110, the first terminal 130, the second terminal 140 and the third terminal 150 are respectively connected with the server 120 via a wired or wireless network.

Fig. 2 is a flow chart showing a method for processing a request according to an exemplary embodiment. The method for processing a request may be applied to the server 120 of the implementing environment shown in Fig. 1. As shown in Fig. 2, the method for processing a request may include following steps.

In step 202, a query request sent by a first terminal is received, in which the query request is configured to request to query camera data collected by a camera.

The camera data includes image data, or the camera data includes video data, or the camera data includes the image data and the video data.

In step 204, it is judged whether an account corresponding to the first terminal has a permission of obtaining the camera data collected by the camera according to the query request.

In step 206, a first prompt message is pushed to a second terminal bound to the camera if the account corresponding to the first terminal does not have the permission of obtaining the camera data collected by the camera, in which the first prompt message is configured to prompt that the camera data is accessed abnormally.

Alternatively, the method further includes: pushing a second prompt message to a third terminal if the account corresponding to the first terminal does not have the permission of obtaining the camera data collected by the camera; in which the third terminal is a terminal for maintaining and managing the camera data collected by the camera, and the second prompt message is configured to prompt whether to track the first terminal.

Alternatively, the query request includes the account corresponding to the first terminal; judging whether the account corresponding to the first terminal has the permission of obtaining the camera data collected by the camera according to the query request includes: detecting whether the account corresponding to the first terminal is in an access permission list corresponding to the camera, in which the access permission list includes an account corresponding to each terminal having the permission of obtaining the camera data collected by the camera; determining that the account corresponding to the first terminal has the permission of obtaining the camera data collected by the camera if the account corresponding to the first terminal is in the access permission list; determining that the account corresponding to the first terminal does not have the permission of obtaining the camera data collected by the camera if the account corresponding to the first terminal is not in the access permission list.

Alternatively, before receiving the query request sent by the first terminal, the method further includes: receiving a binding request sent by the second terminal or the camera, in which the binding request includes or specifies an account corresponding to the second terminal; adding the account corresponding to the second terminal to the access permission list.

Alternatively, the method further includes: receiving a sharing request sent by the second terminal, in which the sharing request includes or specifies an account corresponding to a fourth terminal; adding the account corresponding to the fourth terminal to the access permission list.

In summary, with the method for processing a request according to embodiments of the present disclosure, after receiving the query request sent by the first terminal, by judging whether the account corresponding to the first terminal has the permission of obtaining the camera data collected by the camera according to the query request, and pushing the first prompt message to the second terminal bound to the camera if no, so as to prompt that the camera data is accessed abnormally, when the user having no permission of obtaining the camera data requests to access the camera data, a reminder of abnormal access may be sent out timely, so as to improve the security of the camera data.

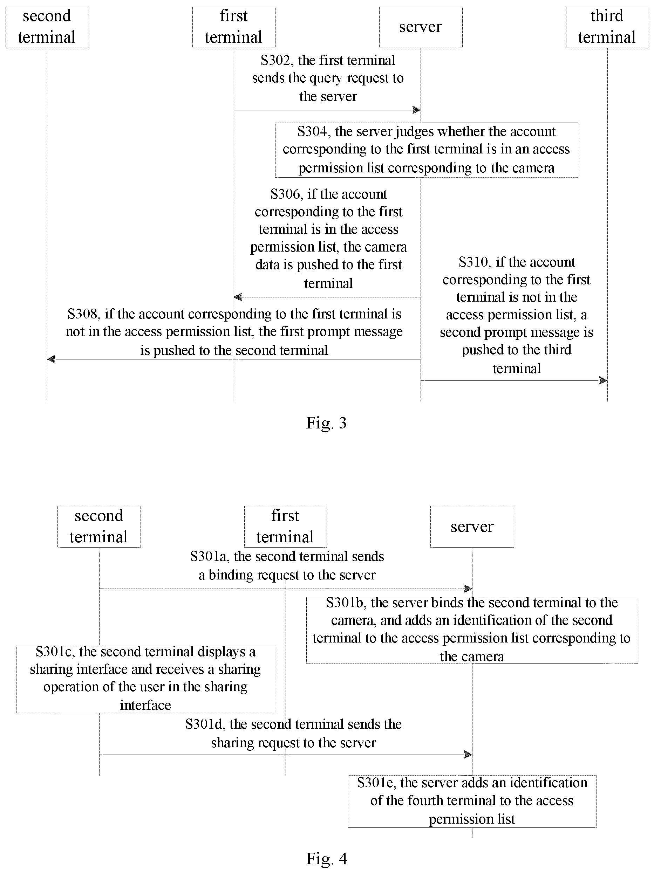

Fig. 3 is a flow chart showing a method for processing a request according to another exemplary embodiment. The method for processing a request may be applied to the server 120 of the implementing environment shown in Fig. 1. As shown in Fig. 3, the method for processing a request may include following steps.

In step 302, the first terminal sends a query request to the server.

The query request includes an account corresponding to the first terminal and is configured to request to query camera data collected by the camera.

When a user corresponding to the first terminal wants to view the camera data collected by the camera, he/she may send the query request to the server via the first terminal. For example, after the first terminal accesses a local area network (LAN) in which the camera is, the first terminal obtains a camera file list collected by the camera and displays it to the user; after the user selects one camera file from the camera file list, the first terminal sends a request for querying the camera data corresponding to the camera file to the server, in which the request may include the account corresponding to the first terminal, an identification of this camera file, an identification of the camera, etc.

In step 304, the server judges whether the account corresponding to the first terminal is in an access permission list corresponding to the camera.

After receiving the query request sent by the first terminal, the server may query the access permission list corresponding to the camera according to the identification of the camera included in the query request, and judge whether the account corresponding to the first terminal is in the access permission list. If yes, it is determined that the account corresponding to the first terminal has the permission of obtaining the camera data collected by the camera, and then step 306 is executed; and if the account corresponding to the first terminal is not in the access permission list, it is determined that the account corresponding to the first terminal does not have the permission of obtaining the camera data collected by the camera, and then steps 308 and 310 are executed.

In step 306, if the account corresponding to the first terminal is in the access permission list, the camera data is pushed to the first terminal.

If the account corresponding to the first terminal is in the access permission list, it indicates that the user corresponding to the second terminal has already shared the camera data collected by the camera to the account corresponding to the first terminal. Now, the server may query the corresponding camera data according to the identification of the camera file included in the query request sent by the first terminal, and then send the queried camera data to the first terminal.

In step 308, if the account corresponding to the first terminal is not in the access permission list, a first prompt message is pushed to the second terminal.

The first prompt message is configured to prompt that the camera data is accessed abnormally.

If the account corresponding to the first terminal is not in the access permission list, it indicates that the user corresponding to the second terminal does not share the camera data collected by the camera to the account corresponding to the first terminal and it is determined that the first terminal accesses the camera file abnormally. Now, the server may push the prompt message to the second terminal, so as to prompt the user corresponding to the second terminal that someone accesses the camera file collected by the camera abnormally, and to alert the user to pay attention to the security of the camera data.

In step 310, if the account corresponding to the first terminal is not in the access permission list, a second prompt message is pushed to the third terminal.

The second prompt message is configured to prompt whether to track the first terminal.

Alternatively, after determining that the first terminal accesses the camera file abnormally, the server may also push the prompt message to the third terminal corresponding to managers of the server, so as to prompt the managers to decide whether to track the first terminal by themselves.

In summary, with the method for processing a request according to embodiments of the present disclosure, after receiving the query request sent by the first terminal, by judging whether the account corresponding to the first terminal has the permission of obtaining the camera data collected by the camera according to the query request, pushing the camera data to the first terminal if yes and pushing the prompt message to the second terminal bound to the camera if no, so as to prompt that the camera data is accessed abnormally, only the user having the permission of obtaining the camera data can view the image data or the video data collected by the camera, and when the user having no permission of obtaining the camera data requests to access the camera data, a reminder of abnormal access may be sent out timely, so as to improve the security of the camera data.

In addition, with the method for processing a request according to embodiments of the present disclosure, by prompting the managers to decide whether to track the terminal performing an illegal access by themselves if it is judged that the account corresponding to the first terminal does not have the permission of obtaining the camera data collected by the camera, the security of the camera data is further improved.

Based on the above method for processing a request shown in Fig. 3 and referring to Fig. 4, which is a flow chart showing a method for adding an account according to an exemplary embodiment, this method for adding an account is applied to add the account having the permission of obtaining the camera data to the access permission list involved by embodiments corresponding to Fig. 3, so that the camera's owner or sharer may view the camera data collected by the camera. This method for adding an account may include following steps.

In step 301a, the second terminal sends a binding request to the server.

The binding request includes an account corresponding to the second terminal and the identification of the camera.

In the smart home, after the camera is installed for the first time, a terminal configured to control the camera needs to be bound to the camera, and then this terminal will have a permission of controlling the camera. When binding, the user may send the binding request to the server via the second terminal, or send the binding request to the server via the camera.

In step 301b, the server binds the second terminal to the camera, and adds an identification of the second terminal to the access permission list corresponding to the camera.

After receiving the binding request sent by the second terminal, the server establishes a corresponding relationship between the account corresponding to the second terminal and the identification of the camera, so as to bind the second terminal to the camera as a control terminal thereof. Then, the second terminal may have a full permission of controlling the camera, other unbound terminals cannot control the camera, or the other terminals can only control a part of functions of the camera.

After binding the second terminal, the server may also add the account corresponding to the second terminal to the access permission list corresponding to the camera.

In step 301c, the second terminal displays a sharing interface and receives a sharing operation of the user in the sharing interface.

The sharing operation is an operation of sharing the camera data collected by the camera to a fourth terminal.

After the second terminal is bound to the camera, the user corresponding to the second terminal may share the permission of obtaining the camera data collected by the camera to other terminals via the second terminal. For example, the second terminal may display the sharing interface of the camera data collected by the camera to the user, in which the sharing interface includes a sharing widget, and after the user clicks the sharing widget, a terminal selection box is popped up, and then the user may select the account corresponding to the fourth terminal, to which the camera data is intended to be shared, for example, a user name or an email, etc.

In step 301d, the second terminal sends a sharing request to the server.

The sharing request includes the account corresponding to the fourth terminal.

After the user selects the fourth terminal in the terminal selection box and determines to share, the second terminal may send the sharing request including the account corresponding to the fourth terminal to the server.

In step 301e, the server adds an identification of the fourth terminal to the access permission list.

After receiving the sharing request and verifying that the second terminal is the terminal which is bound to the camera, the server also adds the account corresponding to the fourth terminal to the access permission list.

In summary, with the method for adding an account according to embodiments of the present disclosure, by adding the accounts carried in the received binding request and sharing request to the access permission list, then only the terminal corresponding to the account bound to the camera and the terminal corresponding to the account to which the camera data is shared are allowed to obtain the camera data collected by the camera, thus ensuring the security of the camera data.

A device embodiment of the present disclosure is shown as following and may be used to execute the method embodiment of the present disclosure. Details undisclosed in the device embodiment of the present disclosure may be referred to the method embodiment of the present disclosure.

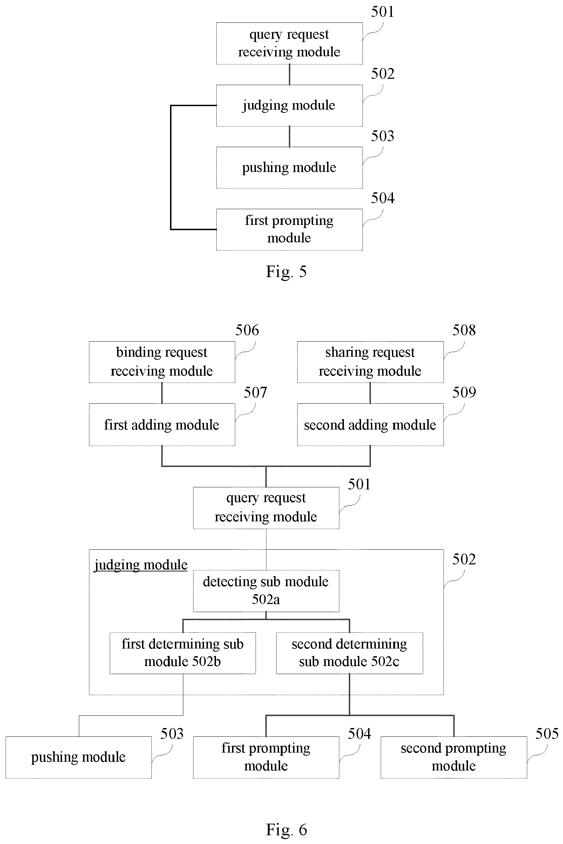

Fig. 5 is a block diagram showing a device for processing a request according to an exemplary embodiment. The device for processing a request may be applied to the server 120 of the implementing environment shown in Fig. 1, and perform all or part of steps shown in Fig. 2, or perform all or part of steps corresponding to the server in the method shown in Fig. 3 or Fig. 4. As shown in Fig. 5, the device for processing a request includes, but is not limited to, a query request receiving module 501, a judging module 502, a pushing module 503 and a first prompting module 504.

The query request receiving module 501 is configured to receive a query request sent by a first terminal, in which the query request is configured to request to query camera data collected by a camera.

The judging module 502 is configured to judge whether the first terminal has a permission of obtaining the camera data collected by the camera according to the query request.

The pushing module 503 is configured to pushing the camera data to the first terminal if the first terminal has the permission of obtaining the camera data collected by the camera.

The first prompting module 504 is configured to push a first prompt message to a second terminal if the first terminal does not have the permission of obtaining the camera data collected by the camera.

The second terminal is a terminal which is bound to the camera. The first prompt message is configured to prompt that the camera data collected by the camera is accessed by the first terminal abnormally.

In summary, with the device for processing a request according to embodiments of the present disclosure, after receiving the query request sent by the first terminal, by judging whether an account corresponding to the first terminal has the permission of obtaining the camera data collected by the camera according to the query request, pushing the camera data to the first terminal if yes and pushing the prompt message to the second terminal bound to the camera if no, so as to prompt that the camera data is accessed abnormally, when the user having no permission of obtaining the camera data requests to access the camera data, a reminder of abnormal access may be sent out timely, so as to improve the security of the camera data.

Fig. 6 is a block diagram showing a device for processing a request according to another exemplary embodiment. The device for processing a request may be applied to the server 120 of the implementing environment shown in Fig. 1, and perform all or part of steps shown in Fig. 2, or perform all or part of steps corresponding to the server in the method shown in Fig. 3 or Fig. 4. As shown in Fig. 6, the device for processing a request includes, but is not limited to, a query request receiving module 501, a judging module 502, a pushing module 503 and a first prompting module 504.

The query request receiving module 501 is configured to receive a query request sent by a first terminal, in which the query request is configured to request to query camera data collected by a camera, and the camera data includes image data and/or video data.

The judging module 502 is configured to judge whether an account corresponding to the first terminal has a permission of obtaining the camera data collected by the camera according to the query request.

The pushing module 503 is configured to pushing the camera data to the first terminal if the account corresponding to the first terminal has the permission of obtaining the camera data collected by the camera.

The first prompting module 504 is configured to push a first prompt message to a second terminal bound to the camera if the account corresponding to the first terminal does not have the permission of obtaining the camera data collected by the camera.

Alternatively, the device further includes: a second prompting module 505.

The second prompting module 505 is configured to push a second prompt message to a third terminal if the account corresponding to the first terminal does not have the permission of obtaining the camera data collected by the camera; in which the third terminal is a terminal for maintaining and managing the camera data collected by the camera, and the second prompt message is configured to prompt whether to track the first terminal.

Alternatively, the query request includes the account corresponding to the first terminal; and the judging module 502 includes: a detecting sub module 502a, a first determining sub module 502b and a second determining sub module 502c.

The detecting sub module 502a is configured to detect whether the account corresponding to the first terminal is in an access permission list corresponding to the camera, in which the access permission list includes an account corresponding to each terminal having the permission of obtaining the camera data collected by the camera.

The first determining sub module 502b is configured to determine that the account corresponding to the first terminal has the permission of obtaining the camera data collected by the camera if the account corresponding to the first terminal is in the access permission list.

The second determining sub module 502c is configured to determine that the account corresponding to the first terminal does not have the permission of obtaining the camera data collected by the camera if the account corresponding to the first terminal is not in the access permission list.

Alternatively, the device further includes: a binding request receiving module 506 and a first adding module 507.

The binding request receiving module 506 is configured to receive a binding request sent by the second terminal or the camera before the query request receiving module receives the query request sent by the first terminal, in which the binding request includes an account corresponding to the second terminal.

The first adding module 507 is configured to add the account corresponding to the second terminal to the access permission list.

Alternatively, the device further includes: a sharing request receiving module 508 and a second adding module 509.

The sharing request receiving module 508 is configured to receive a sharing request sent by the second terminal, in which the sharing request includes an account corresponding to a fourth terminal.

The second adding module 509 is configured to add the account corresponding to the fourth terminal to the access permission list.

In summary, with the device for processing a request according to embodiments of the present disclosure, after receiving the query request sent by the first terminal, by judging whether the account corresponding to the first terminal has the permission of obtaining the camera data collected by the camera according to the query request, pushing the camera data to the first terminal if yes and pushing the prompt message to the second terminal bound to the camera if no, so as to prompt that the camera data is accessed abnormally, when the user having no permission of obtaining the camera data requests to access the camera data, a reminder of abnormal access may be sent out timely, so as to improve the security of the camera data.

In addition, with the device for processing a request according to embodiments of the present disclosure, by prompting the managers to decide whether to track the terminal performing an illegal access by themselves if it is judged that the account corresponding to the first terminal does not have the permission of obtaining the camera data collected by the camera, the security of the camera data is further improved.

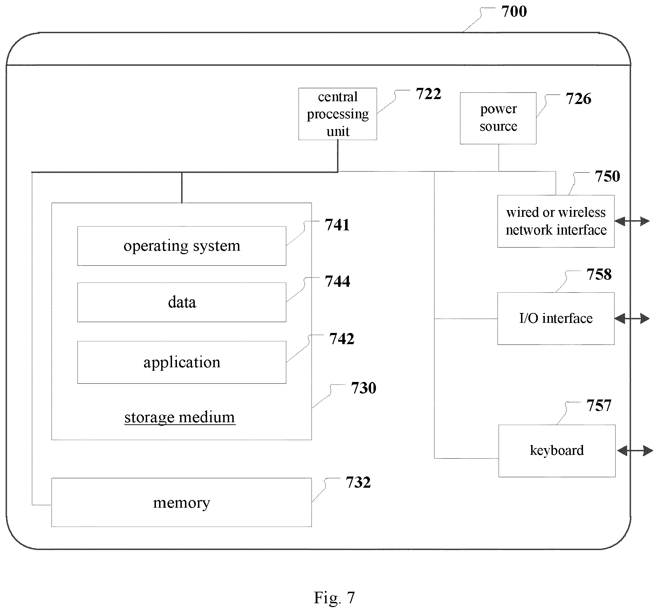

Fig. 7 is a block diagram showing a device 700 according to an exemplary embodiment. The device 700 may have a relatively large difference due to different configurations and properties, which may include one or more central processing units (CPUs) 722 (e.g., one or more processors), a memory 732, one or more storage mediums 730 (e.g. one or more mass storage devices) for storing applications 742 or data 744. The memory 732 and the storage medium 730 may be a transitory storage memory or a non-transitory storage memory. The programs stored in the storage medium 730 may include one or more modules (not shown), each module may include a series of instruction operations for the device, and the series of instruction operations may be configured to implement all of the steps shown in Fig. 2, or to implement all or part of the steps executed by the server shown in Fig. 3 or Fig. 4. Furthermore, the central processing unit 722 is configured to communicate with the storage medium 730 to perform the series of instruction operations stored in the storage medium 730 on the device 700.

The device 700 may also include one or more power sources 726, one or more wired or wireless network interfaces 750, one or more input-output (I/O) interfaces 758, one or more keyboards 757, and/or, one or more operating systems 741, for example, Windows ServerTM, Mac OS XTM, UnixTM, LinuxTM, FreeBSDTM, etc.

With respect to the devices in the above embodiments, the specific manners for performing operations for individual modules therein have been described in detail in the embodiments regarding the methods, which are not elaborated herein again.

## Claims

1. A method for processing a request, being **characterized by**:
receiving (202), at a server, a request for querying camera data collected by a camera from a first terminal, wherein the first terminal accesses a local area network in which the camera is, obtains a camera file list collected by the camera, displays the camera file list to a user, receives a selection from the user of one camera file from the camera file list, and sends the request for querying camera data corresponding to the selected camera file to the server, the request comprising an account corresponding to the first terminal;
judging (204), by the server, whether the account corresponding to the first terminal has a permission of obtaining the camera data collected by the camera; and
pushing (206), by the server, a first prompt message to a second terminal and pushing, by the server, (S310) a second prompt message to a third terminal in response that the account corresponding to the first terminal does not have the permission of obtaining the camera data collected by the camera, in which the first prompt message is configured to prompt an abnormal access for the camera, the second prompt message is configured to prompt to track the first terminal, the second terminal is bound to the camera, and the third terminal is corresponding to a manager of the server.

2. The method according to claim 1, further comprising:
pushing (S306) the camera data to the first terminal in response that the account corresponding to the first terminal has the permission of obtaining the camera data collected by the camera.

3. The method according to claim 1 or 2, wherein the request comprises the account corresponding to the first terminal; and judging (204) whether the account corresponding to the first terminal has the permission of obtaining the camera data collected by the camera according to the query request comprises:
detecting (S304) whether the account corresponding to the first terminal is in an access permission list corresponding to the camera, wherein the access permission list comprises an account corresponding to each terminal having the permission of obtaining the camera data collected by the camera;
determining (S306) that the account corresponding to the first terminal has the permission of obtaining the camera data collected by the camera in response that the account corresponding to the first terminal is in the access permission list;
determining (S308) that the account corresponding to the first terminal does not have the permission of obtaining the camera data collected by the camera in response that the account corresponding to the first terminal is not in the access permission list.

4. The method according to any preceding claim, further comprising:
receiving a binding request sent by the second terminal or the camera, wherein the binding request comprises an account corresponding to the second terminal;
adding the account corresponding to the second terminal to the access permission list.

5. The method according to any preceding claim, further comprising:
receiving a sharing request sent by the second terminal, wherein the sharing request comprises an account corresponding to a fourth terminal;
adding the account corresponding to the fourth terminal to the access permission list.

6. A device for processing a request, being **characterized by**:
a query request receiving module (501), configured to receive a request for querying camera data collected by a camera from a first terminal, wherein the first terminal accesses a local area network in which the camera is, obtains a camera file list collected by the camera, displays the camera file list to a user, receives a selection from the user of one camera file from the camera file, and sends the request for querying camera data corresponding to the selected camera file to the query request receiving module, the request comprising an account corresponding to the first terminal;
a judging module (502), configured to judge whether the account corresponding to the first terminal has a permission of obtaining the camera data collected by the camera;
a first prompting module (504), configured to push a first prompt message to a second terminal in response that the account corresponding to the first terminal does not have the permission of obtaining the camera data collected by the camera; and
a second prompting module (505), configured to push a second prompt message to a third terminal in response that the account corresponding to the first terminal does not have the permission of obtaining the camera data collected by the camera,
in which the first prompt message is configured to prompt an abnormal access for the camera, the second prompt message is configured to prompt to track the first terminal, the second terminal is bound to the camera, and the third terminal is corresponding to a manager of the server.

7. The device according to claim 6, further comprising:
a pushing module (503), configured to push the camera data to the first terminal in response that the account corresponding to the first terminal has the permission of obtaining the camera data collected by the camera.

8. The device according to claim 6 or 7, wherein the request comprises the account corresponding to the first terminal; and the judging module (502) comprises:
a detecting sub module (502a), configured to detect whether the account corresponding to the first terminal is in an access permission list corresponding to the camera, wherein the access permission list comprises an account corresponding to each terminal having the permission of obtaining the camera data collected by the camera;
a first determining sub module (502b), configured to determine that the account corresponding to the first terminal has the permission of obtaining the camera data collected by the camera in response that the account corresponding to the first terminal is in the access permission list;
a second determining sub module (502c), configured to determine that the account corresponding to the first terminal does not have the permission of obtaining the camera data collected by the camera in response that the account corresponding to the first terminal is not in the access permission list.

9. The device according to any preceding claim, further comprising:
a binding request receiving module (506), configured to receive a binding request sent by the second terminal or the camera before the query request receiving module (501) receives the query request sent by the first terminal, wherein the binding request comprises an account corresponding to the second terminal;
a first adding module (507), configured to add the account corresponding to the second terminal to the access permission list.

10. The device according to any preceding claim, further comprising:
a sharing request receiving module (508), configured to receive a sharing request sent by the second terminal, wherein the sharing request comprises an account corresponding to a fourth terminal;
a second adding module (509), configured to add the account corresponding to the fourth terminal to the access permission list.

11. A computer program, which when executing on a processor, performs a method according to any one of claims 1 to 5.

## Patentansprüche

1. Verfahren zur Verarbeitung einer Anforderung, **gekennzeichnet durch**:
Empfangen (202), an einem Server, einer Anforderung zum Abfragen von durch eine Kamera erfassten Kameradaten von einem ersten Endgerät, wobei das erste Endgerät auf ein lokales Netzwerk zugreift, in dem sich die Kamera befindet, eine durch die Kamera erfasste Kameradateienliste erhält, die Kameradateienliste einem Benutzer anzeigt, eine Auswahl einer Kameradatei aus der Kameradateienliste vom Benutzer empfängt und die Anforderung zum Abfragen von Kameradaten, die der ausgewählten Kameradatei entsprechen, an den Server sendet, wobei die Anforderung ein dem ersten Endgerät entsprechendes Konto aufweist;
Urteilen (204), durch den Server, ob das dem ersten Endgerät entsprechende Konto eine Berechtigung zum Erhalten der durch die Kamera erfassten Kameradaten hat; und
Pushen (206), durch den Server, einer ersten Aufforderungsnachricht zu einem zweiten Endgerät und Pushen, durch den Server, (S310) einer zweiten Aufforderungsnachricht zu einem dritten Endgerät als Reaktion darauf, dass das dem ersten Endgerät entsprechende Konto keine Berechtigung zum Erhalten der durch die Kamera erfassten Kameradaten hat, bei dem die erste Aufforderungsnachricht zum Auffordern zu einem abnormalen Zugriff für die Kamera konfiguriert ist, die zweite Aufforderungsnachricht zum Auffordern zum Verfolgen des ersten Endgeräts konfiguriert ist, das zweite Endgerät an die Kamera gebunden ist und das dritte Endgerät einem Manager des Servers entspricht.

2. Verfahren nach Anspruch 1, das ferner Folgendes aufweist:
Pushen (S306) der Kameradaten zu dem ersten Endgerät als Reaktion darauf, dass das dem ersten Endgerät entsprechende Konto die Berechtigung zum Erhalten der durch die Kamera erfassten Kameradaten hat.

3. Verfahren nach Anspruch 1 oder 2, wobei die Anforderung das dem ersten Endgerät entsprechende Konto aufweist; und Urteilen (204), ob das dem ersten Endgerät entsprechende Konto die Berechtigung zum Erhalten der durch die Kamera erfassten Kameradaten hat, gemäß der Abfrageanfrage Folgendes aufweist:
Erkennen (S304), ob das dem ersten Endgerät entsprechende Konto in einer der Kamera entsprechenden Zugriffsberechtigungsliste ist, wobei die Zugriffsberechtigungsliste ein jedem Endgerät, das die Berechtigung zum Erhalten der durch die Kamera erfassten Kameradaten hat, entsprechendes Konto aufweist;
Bestimmen (S306), dass das dem ersten Endgerät entsprechende Konto die Berechtigung zum Erhalten der durch die Kamera erfassten Kameradaten hat, als Reaktion darauf, dass das dem ersten Endgerät entsprechende Konto in der Zugriffsberechtigungsliste ist;
Bestimmen (S308), dass das dem ersten Endgerät entsprechende Konto nicht die Berechtigung zum Erhalten der durch die Kamera erfassten Kameradaten hat, als Reaktion darauf, dass das dem ersten Endgerät entsprechende Konto nicht in der Zugriffsberechtigungsliste ist.

4. Verfahren nach einem der vorhergehenden Ansprüche, das ferner Folgendes aufweist:
Empfangen einer durch das zweite Endgerät oder die Kamera gesendeten Bindungsanfrage, wobei die Bindungsanfrage ein dem zweiten Endgerät entsprechendes Konto aufweist;
Hinzufügen des dem zweiten Endgerät entsprechenden Kontos zur Zugriffsberechtigungsliste.

5. Verfahren nach einem der vorhergehenden Ansprüche, das ferner Folgendes aufweist:
Empfangen einer durch das zweite Endgerät gesendeten Freigabeanforderung, wobei die Freigabeanforderung ein einem vierten Endgerät entsprechendes Konto aufweist;
Hinzufügen des dem vierten Endgerät entsprechenden Kontos zur Zugriffsberechtigungsliste.

6. Vorrichtung zur Verarbeitung einer Anforderung, **gekennzeichnet durch**:
ein Abfrageanforderungsempfangsmodul (501), das zum Empfangen einer Anforderung zum Abfragen von durch eine Kamera erfassten Kameradaten von einem ersten Endgerät konfiguriert ist, wobei das erste Endgerät auf ein lokales Netzwerk zugreift, in dem sich die Kamera befindet, eine durch die Kamera erfasste Kameradateienliste erhält, die Kameradateienliste einem Benutzer anzeigt, eine Auswahl einer Kameradatei aus der Kameradateienliste vom Benutzer empfängt und die Anforderung zum Abfragen von Kameradaten, die der ausgewählten Kameradatei entsprechen, an das Abfrageanforderungsempfangsmodul sendet, wobei die Anforderung ein dem ersten Endgerät entsprechendes Konto aufweist;
ein Urteilsmodul (502), das zum Urteilen, ob das dem ersten Endgerät entsprechende Konto eine Berechtigung zum Erhalten der durch die Kamera erfassten Kameradaten hat, konfiguriert ist;
ein erstes Aufforderungsmodul (504), das zum Pushen einer ersten Aufforderungsnachricht zu einem zweiten Endgerät als Reaktion darauf, dass das dem ersten Endgerät entsprechende Konto keine Berechtigung zum Erhalten der durch die Kamera erfassten Kameradaten hat; und
ein zweites Aufforderungsmodul (505), das zum Pushen einer zweiten Aufforderungsnachricht zu einem dritten Endgerät als Reaktion darauf, dass das dem ersten Endgerät entsprechende Konto keine Berechtigung zum Erhalten der durch die Kamera erfassten Kameradaten hat, konfiguriert ist,
bei dem die erste Aufforderungsnachricht zum Auffordern zu einem abnormalen Zugriff für die Kamera konfiguriert ist, die zweite Aufforderungsnachricht zum Auffordern zum Verfolgen des ersten Endgeräts konfiguriert ist, das zweite Endgerät an die Kamera gebunden ist und das dritte Endgerät einem Manager des Servers entspricht.

7. Vorrichtung nach Anspruch 6, die ferner Folgendes aufweist:
ein Pushmodul (503), das zum Pushen der Kameradaten zum ersten Endgerät als Reaktion darauf, dass das dem ersten Endgerät entsprechende Konto die Berechtigung zum Erhalten der durch die Kamera erfassten Kameradaten hat, konfiguriert ist.

8. Vorrichtung nach Anspruch 6 oder 7, wobei die Anforderung das dem ersten Endgerät entsprechende Konto aufweist; und das Urteilsmodul (502) Folgendes aufweist:
ein Erkennungsuntermodul (502a), das zum Erkennen, ob das dem ersten Endgerät entsprechende Konto in einer der Kamera entsprechenden Zugriffsberechtigungsliste ist, konfiguriert ist, wobei die Zugriffsberechtigungsliste ein jedem Endgerät, das die Berechtigung zum Erhalten der durch die Kamera erfassten Kameradaten hat, entsprechendes Konto aufweist;
ein erstes Bestimmungsuntermodul (502b), das zum Bestimmen, dass das dem ersten Endgerät entsprechende Konto die Berechtigung zum Erhalten der durch die Kamera erfassten Kameradaten hat, als Reaktion darauf, dass das dem ersten Endgerät entsprechende Konto in der Zugriffsberechtigungsliste ist, konfiguriert ist;
ein zweites Bestimmungsuntermodul (502c), das zum Bestimmen, dass das dem ersten Endgerät entsprechende Konto nicht die Berechtigung zum Erhalten der durch die Kamera erfassten Kameradaten hat, als Reaktion darauf, dass das dem ersten Endgerät entsprechende Konto nicht in der Zugriffsberechtigungsliste ist, konfiguriert ist.

9. Vorrichtung nach einem der vorhergehenden Ansprüche, die ferner Folgendes aufweist:
ein Bindungsanforderungsempfangsmodul (506), das zum Empfangen einer durch das zweite Endgerät oder die Kamera gesendeten Bindungsanforderung, bevor das Abfrageanforderungsempfangsmodul (501) die durch das erste Endgerät gesendete Abfrageanforderung empfängt, konfiguriert ist, wobei die Bindungsanforderung ein dem zweiten Endgerät entsprechendes Konto aufweist;
ein erstes Hinzufügungsmodul (507), das zum Hinzufügen des dem zweiten Endgerät entsprechenden Kontos zur Zugriffsberechtigungsliste konfiguriert ist.

10. Vorrichtung nach einem der vorhergehenden Ansprüche, die ferner Folgendes aufweist:
ein Freigabeanforderungsempfangsmodul (508), das zum Empfangen einer durch das zweite Endgerät gesendeten Freigabeanforderung konfiguriert ist, wobei die Freigabeanforderung ein einem vierten Endgerät entsprechendes Konto aufweist;
ein zweites Hinzufügungsmodul (509), das zum Hinzufügen des dem vierten Endgerät entsprechenden Kontos zur Zugriffsberechtigungsliste konfiguriert ist.

11. Computerprogramm, das bei Ausführung auf einem Prozessor ein Verfahren nach einem der Ansprüche 1 bis 5 durchführt.

## Revendications

1. Procédé de traitement d'une requête, **caractérisé par** :
la réception (202), au niveau d'un serveur, d'une requête d'interrogation de données de caméra collectées par une caméra à partir d'un premier terminal, dans lequel le premier terminal accède à un réseau local dans lequel se trouve la caméra, obtient une liste de fichiers de caméra collectée par la caméra, affiche la liste de fichiers de caméra à un utilisateur, reçoit une sélection par l'utilisateur d'un fichier de caméra dans la liste de fichiers de caméra, et envoie au serveur la requête d'interrogation de données de caméra correspondant au fichier de caméra sélectionné, la requête comprenant un compte correspondant au premier terminal ;
le jugement (204), par le serveur, que le compte correspondant au premier terminal est autorisé ou non à obtenir les données de caméra collectées par la caméra ; et
la poussée (206), par le serveur, d'un premier message d'invite vers un deuxième terminal et la poussée, par le serveur, (S310) d'un deuxième message d'invite à un troisième terminal quand le compte correspondant au premier terminal n'est pas autorisé à obtenir les données de caméra collectées par la caméra, dans lequel le premier message d'invite est configuré pour inviter un accès anormal à la caméra, le deuxième message d'invite est configuré pour inviter à suivre le premier terminal, le deuxième terminal est lié à la caméra et le troisième terminal correspond à un gestionnaire du serveur.

2. Procédé selon la revendication 1, comprenant en outre :
la poussée (S306) des données de caméra vers le premier terminal quand le compte correspondant au premier terminal est autorisé à obtenir les données de caméra collectées par la caméra.

3. Procédé selon la revendication 1 ou 2, dans lequel la requête comprend le compte correspondant au premier terminal ; et le jugement (204) que le compte correspondant au premier terminal est autorisé ou non à obtenir les données de caméra collectées par la caméra conformément à la requête d'interrogation comprend :
la détection (S304) que le compte correspondant au premier terminal figure ou non dans une liste d'autorisations d'accès correspondant à la caméra, dans lequel la liste d'autorisations d'accès comprend un compte correspondant à chaque terminal autorisé à obtenir les données de caméra collectées par la caméra ;
la détermination (S306) que le compte correspondant au premier terminal est autorisé à obtenir les données de caméra collectées par la caméra quand le compte correspondant au premier terminal figure dans la liste d'autorisations d'accès ;
la détermination (S308) que le compte correspondant au premier terminal n'est pas autorisé à obtenir les données de caméra collectées par la caméra quand le compte correspondant au premier terminal ne figure pas dans la liste d'autorisations d'accès.

4. Procédé selon l'une quelconque des revendications précédentes, comprenant en outre :
la réception d'une requête de liaison envoyée par le deuxième terminal ou la caméra, dans lequel la requête de liaison comprend un compte correspondant au deuxième terminal ;
l'ajout du compte correspondant au deuxième terminal à la liste d'autorisations d'accès.

5. Procédé selon l'une quelconque des revendications précédentes, comprenant en outre :
la réception d'une requête de partage envoyée par le deuxième terminal, dans lequel la requête de partage comprend un compte correspondant à un quatrième terminal ;
l'ajout du compte correspondant au quatrième terminal à la liste d'autorisations d'accès.

6. Dispositif de traitement d'une requête, **caractérisé par** :
un module de réception de requête d'interrogation (501), configuré pour recevoir une requête d'interrogation de données de caméra collectées par une caméra à partir d'un premier terminal, dans lequel le premier terminal accède à un réseau local dans lequel se trouve la caméra, obtient une liste de fichiers de caméra collectés par la caméra, affiche la liste de fichiers de caméra à un utilisateur, reçoit une sélection par l'utilisateur d'un fichier de caméra dans le fichier de caméra, et envoie la requête d'interrogation de données de caméra correspondant au fichier de caméra sélectionné au module de réception de requête d'interrogation, la requête comprenant un compte correspondant au premier terminal ;
un module de jugement (502), configuré pour juger que le compte correspondant au premier terminal est autorisé ou non à obtenir les données de caméra collectées par la caméra ;
un premier module d'invite (504), configuré pour pousser un premier message d'invite vers un deuxième terminal quand le compte correspondant au premier terminal n'est pas autorisé à obtenir les données de caméra collectées par la caméra ; et
un deuxième module d'invite (505), configuré pour pousser un deuxième message d'invite vers un troisième terminal quand le compte correspondant au premier terminal n'est pas autorisé à obtenir les données de caméra collectées par la caméra ;
dans lequel le premier message d'invite est configuré pour inviter un accès anormal à la caméra, le deuxième message d'invite est configuré pour inviter à suivre le premier terminal, le deuxième terminal est lié à la caméra et le troisième terminal correspond à un gestionnaire du serveur.

7. Dispositif selon la revendication 6, comprenant en outre :
un module de poussée (503), configuré pour pousser les données de caméra vers le premier terminal quand le compte correspondant au premier terminal est autorisé à obtenir les données de caméra collectées par la caméra.

8. Dispositif selon la revendication 6 ou 7, dans lequel la requête comprend le compte correspondant au premier terminal ; et le module de jugement (502) comprend :
un sous-module de détection (502a), configuré pour détecter que le compte correspondant au premier terminal figure ou non dans une liste d'autorisations d'accès correspondant à la caméra, dans lequel la liste d'autorisations d'accès comprend un compte correspondant à chaque terminal autorisé à obtenir les données de caméra collectées par la caméra ;
un premier sous-module de détermination (502b), configuré pour déterminer que le compte correspondant au premier terminal est autorisé à obtenir les données de caméra collectées par la caméra quand le compte correspondant au premier terminal figure dans la liste d'autorisations d'accès ;
un deuxième sous-module de détermination (502c), configuré pour déterminer que le compte correspondant au premier terminal n'est pas autorisé à obtenir les données de la caméra collectées par la caméra quand le compte correspondant au premier terminal ne figure pas dans la liste d'autorisations d'accès.

9. Dispositif selon l'une quelconque des revendications précédentes, comprenant en outre :
un module de réception de requête de liaison (506), configuré pour recevoir une requête de liaison envoyée par le deuxième terminal ou la caméra avant que le module de réception de requête (501) ne reçoive la requête d'interrogation envoyée par le premier terminal, dans lequel la requête de liaison comprend un compte correspondant au deuxième terminal,
un premier module d'ajout (507), configuré pour ajouter le compte correspondant au deuxième terminal à la liste d'autorisations d'accès.

10. Dispositif selon l'une quelconque des revendications précédentes, comprenant en outre :
un module de réception de requête de partage (508), configuré pour recevoir une requête de partage envoyée par le deuxième terminal, dans lequel la requête de partage comprend un compte correspondant à un quatrième terminal ;
un deuxième module d'ajout (509), configuré pour ajouter le compte correspondant au quatrième terminal à la liste d'autorisations d'accès.

11. Programme d'ordinateur qui, à son exécution sur un processeur, réalise un procédé selon l'une quelconque des revendications 1 à 5.
